# EUROPEAN PATENT APPLICATION

(11) **EP 4 835 623 A1**
(43) Date of publication of application: **04.11.2026**
(21) Application number: 26169710.6
(22) Date of filing: 31.03.2026
(51) Int. Cl.: G06F 3/01, G05B 19/418

(54) **INFORMATION VISUALIZING SYSTEM AND METHOD**

(30) Priority: 30.04.2025 DE 102025116723
(71) Applicant: Eaton Intelligent Power Limited, D04 Y0C2 Dublin 4 (IE)
(72) Inventor: Haan, Sven, 52146 Würselen (DE)
(74) Representative: Epping - Hermann - Fischer

(57) **Abstract**

An information visualizing system (1000) for a production machine (1010), the information visualizing system (1000) comprising a transparent display device (1070) that is arrangeable such that a first side of the transparent display device (1070) faces towards a user and a second side of the transparent display device (1070) faces towards one or more physical objects (1060, 2040) within the production machine (1010) a camera device (1030) configured to obtain eye tracking data from the user and a processing unit configured to determine, based on the eye tracking data of the user, a viewing position (1050) of the user in relation to the first side of the transparent display device (1070) and determine, based on the viewing position (1050) of the user and on a spatial position of one of the one or more physical objects (1060, 2040), a first position of a data visualization element (1080) on the transparent display device (1070) at a defined distance to a second position, at which the one physical object (1060, 2040) is visible to the user through the transparent display device (1070).

## Description

### TECHNICAL FIELD

This disclosure relates to an information visualization system. The disclosure further relates to a method for visualizing information on a production machine.

### BACKGROUND ART

Augmented Reality (AR) has emerged as a transformative technology in various industries, including manufacturing, by enhancing the interaction between digital content and the physical world. In current production environments, production machines and other industrial systems are usually controlled by either physical controls such as buttons and indicators or with touchscreens as human machine interfaces (HMI). HMIs already provide a wealth of information for users and allow interaction, yet they rely on abstract visual representations. Those abstractions are usually displayed on separate displays, requiring machine operators to look away from the production process. Furthermore, these abstractions may not carry enough information about the process and leave away nuances about the process which can make handling more difficult or even dangerous.

To overcome these limitations and challenges AR is a promising technology and is in ongoing evaluation in the industry. Commonly used are AR glasses which come with their own challenges. Such AR glasses, worn by machine operators, are usually expensive and too fragile for manufacturing sites. The need for specialized training can make it prohibitive for smaller manufacturers. Additionally, the ergonomics of AR glasses may limit long-term comfort for workers. Finally, while AR increases efficiency, its adoption is still a challenge.

### SUMMARY OF INVENTION

An object to be achieved is to provide an improved information visualization concept for (automated) production facilities that facilitates adoption of AR applications.

This object is achieved with the subject-matter of the independent claims. Embodiments and developments derive from the dependent claims.

According to the present disclosure, an information visualizing system, which may be used as a human machine interface (HMI), for a production machine, e.g. (automated) production or processing and manufacturing equipment and facilities, assembly lines and other industrial machinery, comprises a transparent display device that is arrangeable such that a first side of the transparent display device faces towards a user. A second side of the transparent display device faces towards one or more physical objects within the production machine, whereby, for example, the physical objects may not be confined within a housing but rather, e.g. within an operational space of the production machine, e.g. the range of motion of a free-standing robotic arm.

A camera device is configured to obtain eye tracking data from the user. Further, a processing unit is configured to determine, based on the eye tracking data of the user, a viewing position of the user in relation to the first side of the transparent display device. Further, the processing unit is configured to determine, based on the viewing position of the user and on a spatial position of one of the one or more physical objects, a first position of a data visualization element on the transparent display device at a defined distance to a second position. At the second position the one physical object is visible to the user through the transparent display device. For example, the spatial position may be provided by the production machine, e.g. through an interface or a second camera device. Further, the viewing position may be determined, e.g., to be the average value of the viewing positions of the two eyes of the user.

This enables the user to stay focused on the physical objects of a production process, while still being able to oversee process data and/or control the machine. For example, the physical objects may comprise CNC machines, robotic arms, injection molding machines, press machines, 3D printers, milling machines, laser cutting machines, extruders, welding machines or assembly machines and/or other types of production process equipment. Further, the physical objects may also comprise an assembly line, e.g. conveyor belts, pick-and-place robots, screwdrivers and fastening machines, robotic welding systems, automated labeling systems, packaging machines, pneumatic presses, robotic painting systems, turntables and indexers and/or other types of assembly line equipment. Further, the physical objects may also comprise parts of a product or material in the production process.

The user is hereby liberated from wearing AR headsets or other inconvenient or impractical equipment in a production environment. Moreover, interaction with the production machine becomes more immersive and intuitive by reducing the distraction caused by separate process visualization screens that require the user to look away from the physical objects of the production machine. Thereby efficiency and safety are increased.

According to the invention, the first position is defined on a plane of the transparent display device. The processing unit is configured to determine the first position by obtaining a first vector from the viewing position from the user and to obtain a second vector of the spatial position of the one physical object. Further, the processing unit is configured to combine the first vector and the second vector to obtain the second position, as an intersection of a line of sight between the user and the one physical object with the plane of the transparent display device. Further, the processing unit is configured to determine the first position of the data visualization element on the plane of the transparent display device in relation to the intersection of the line of sight with the plane of the transparent display device as an offset to the second position.

For example, the physical object is connected to the viewing position through a line of sight, e.g. the direction the user is looking at the physical object. This line of sight intersects the plane of the transparent display device. At the point of intersection, the physical object appears to the user through the screen. The first position of the data visualization element is then determined to be at an offset to the second position. Thereby, the data visualization element appears to the user on the transparent display device in a relation to the physical object, e.g. as if the data visualization element is floating next to the physical object.

Thereby data visualization elements, e.g. buttons, forms, graphs and many more user interface (UI) elements, may easily be displayed in direct relation to the physical objects in the production machine. That way information about the production process, such as temperatures, speeds, forces and other process-critical data may be visualized in direct relation to the physical objects where the data was measured or collected. Furthermore, data indicating the state of the production process may be visualized by highlighting target positions, indicating errors and overlaying help information. Having this information available without an abstraction on a separate display away from the actual production process enables the user to make faster decisions and interact with the machine more quickly and securely.

In some implementations, the transparent display device is configured as a viewing window, e.g. a glass or plastic pane, in an opening of the production machine. This facilitates the design of new machines, where the information visualization system may be seamlessly integrated into the final product. Thereby a deeper integration into the system of the production machine is possible, leveraging additional optimization possibilities and, in turn, making the product more attractive towards customers.

In some implementations, the transparent display device is mountable, e.g. by attaching it or by using screws or glue, on a viewing window in an opening of the production machine.

This allows older or existing machines and systems to be retrofitted, allowing the advantages of the information visualization system to be utilized without major investments and/or lengthy conversion measures.

In some implementations, the transparent display device is a touch screen, and the data visualization element is configured to be manipulated by the user. This enables the user to manipulate the information visualization of the production process data using common touch gestures, for example by tapping, double tapping, swiping, dragging, flicking, pinching, spreading, pressing, pressing and tapping or dragging, rotating, and others. Further, additional data might be requested for a physical object or the production process in general. Thereby a faster and more flexible feedback is provided, allowing for quicker and more confident decision making.

In some implementations, the data visualization element is configured for controlling the production machine. This enables the user to directly control the production process while still being able to overlook the actual physical process within the production machine, in contrast to conventional separate control devices which usually offer only limited, e.g. abstracted, or even no process information. That way a direct feedback loop is established which allows faster and safer control of the production machine, e.g. in direct reaction to events like errors or other potentially hazardous conditions.

Further, machine setup might be facilitated where it might be necessary to drive certain machine parts closer to a workpiece to be worked on. For example, the milling head of a CNC machine might be moved closer to a piece of metal which requires full focus of the user to avoid collisions which could damage the machine. Being able to see workpiece while controlling the production machine without diverting the attention of the user away towards separate control devices makes it easier and safer to operate the production machine.

In some implementations, the camera device is configured to obtain eye tracking data using infrared spectrum light, and/or a depth sensor and/or other multi-sensor technology. For example, near-infrared spectrum light may be used to illuminate the eyes and create light reflection patterns onto each eye whereby sensors may be used to precisely determine where the user is looking. Using specialized devices increases the accuracy for obtaining eye tracking data from the user and thereby the precision of the first position of data visualization elements. Higher precision allows for more accurate data visualization and machine control, increasing safety and efficiency.

The present disclosure further provides a method for visualizing information on a production machine, which comprises a transparent display device that is arrangeable such that a first side of the transparent display device faces towards a user and a second side of the transparent display device faces towards one or more physical objects within the production machine. The method comprises determining, based on obtained eye tracking data of the user, a viewing position of the user in relation to the first side of the transparent display device and determining, based on the viewing position of the user and on a spatial position of one of the one or more physical objects, a first position of a data visualization element on the transparent display device at a defined distance to a second position, at which the one physical object is visible to the user through the transparent display device.

For example, based on the first position, additional data visualization elements with data about a physical object may be displayed on the transparent display device such that they appear to the user in a virtual relation to the physical object, providing a sense of affinity between the virtual data visualization element and the physical object. This enhances immersion into physical production processes and thereby increases safety and efficiency.

According to the invention, the first position is defined on a plane of the transparent display device. Determining the first position comprises obtaining a first vector from the viewing position from the user and by obtaining a second vector of the second position of the one physical object and by combining the first vector and the second vector to obtain the second position, as an intersection of a line of sight between the user and the one physical object with the plane of the transparent display device. Further, the processing unit is configured to determine the first position of the data visualization element on the plane of the transparent display device in relation to the intersection of the line of sight with the plane of the transparent display device as an offset to the second position.

The processing unit may be configured such that it provides ample resources for generating data visualization elements. Since physical objects are usually moving, e.g. through the operational space of the production machine, and not stationary, the rendering of the data visualization elements might be repeated at a high frequency, such that a high framerate, e.g. an updated visualization on the transparent display device, may be achieved. This reduces motion blur and screen tearing, resulting in smoother and more responsive visualization. Thereby the user may react faster and has more precise control over the production machine.

In some implementations, the eye tracking data is obtained with a camera device. By using eye tracking data from a camera device, the first position may be determined with high accuracy by the processing unit.

In some implementations, the data visualization element is provided to be manipulated by the user through the transparent display device, wherein the transparent display device is configured as a touch screen.

In some implementations, the data visualization element is provided for controlling the production machine.

Further embodiments of the information visualizing method become readily apparent from the various implementations of the information visualizing system described above or below.

Various embodiments of the information visualizing system can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the information visualizing system. The logic may form part of a computer program product adapted to direct an information-processing device to automatically perform a set of steps disclosed in embodiments of the information visualizing system.

### BRIEF DESCRIPTION OF DRAWINGS

The improved information visualization concept will be explained in more detail in the following with the aid of the drawings. Elements and functional blocks having the same or similar function bear the same reference numerals throughout the drawings. Hence their description is not necessarily repeated in the following drawings.

In the drawings:
Figure 1 shows a schematic information visualization system applied to a production machine; and
Figure 2 shows a detailed scheme of an embodiment of an information visualizing system.

### DETAILED DESCRIPTION

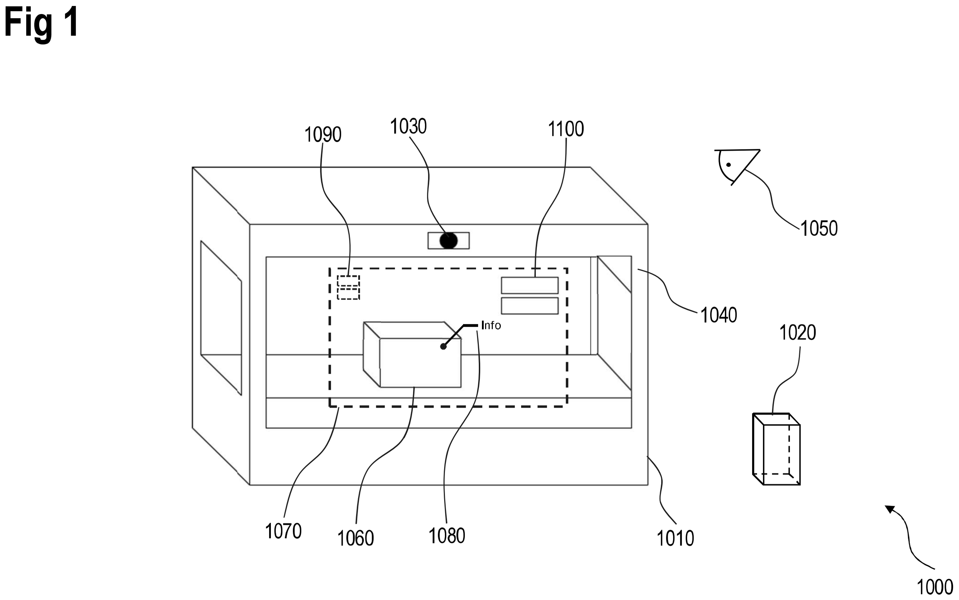

Figure 1 shows a schematic information visualization system 1000 applied to a production machine 1010. The information visualization system 1000 comprises a camera device 1030, a transparent display device 1070 and a processing unit 1020. A viewing window 1040 in an opening of the production machine 1010 may be configured as a transparent display device 1070. In an alternative embodiment the transparent display device 1070 may be mounted on the viewing window 1040. One or more physical objects 1060, e.g. movable parts of the production machine or workpieces, are within the production machine 1010.

The camera device 1030 is configured to obtain eye tracking data from a user which is used by the processing unit 1020 to determine a viewing position 1050. The processing unit 1020 is further configured to combine the viewing position 1050 and a spatial position of a first physical object 1060 to determine a first position of a first data visualization element 1080 on the transparent display device 1070.

Further, static data visualization elements may be shown on a fixed location on the transparent display device 1070, e.g. a first static data visualization element 1090 and a second static data visualization element 1100. These additional static data visualization elements may provide auxiliary information that is not related to physical objects.

The first position of the first data visualization element 1080 may thereby be linked to a second position of the first physical object 1060. As the first physical object 1060 moves through an operational space of the production machine 1010, the first position may be dynamically adjusted such that the first data visualization element 1080 may appear to the user as if it were in the proximity of, or in direct relation to the first physical object 1060.

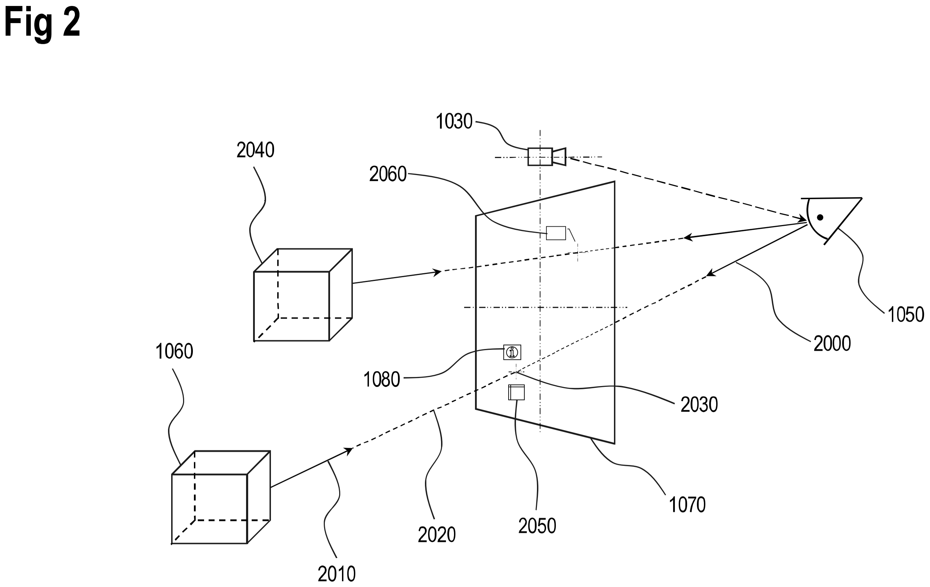

Figure 2 shows a detailed scheme of an embodiment of an information visualizing system 1000, wherein the first physical object 1060 and a second physical object 2040 may be seen through the transparent display device 1070. The camera device 1030 obtains eye tracking data of the user which is used by the processing unit 1020 to determine the viewing position 1050 and therefrom a first vector 2000. In combination with a second vector 2010 of the first physical object 1060 a line of sight 2020 may be determined by the processing unit 1020.

The processing unit 1020 is further configured to determine a second position as a point intersection 2030 of the line of sight 2020 with a plane of the transparent display device 1070. Further, a first position may be determined as an offset to the second position. On the first position a first data visualization element 1080 may be displayed on the plane of the transparent display device 1070. A third position of a second data visualization element 2050 may also be determined as an offset to the second position.

By using the same method for determining the second position, a fourth position for the second physical object 2040 may be determined. A fifth position for a third data visualization element 2060 may be determined as an offset to the fourth position. In further embodiments a number of positions for physical objects on the transparent display 1070 device may be unlimited, as may data visualization elements.

The specification and drawings are, accordingly, to be regarded in an illustrative rather than a restrictive sense. However, it will be evident that various modifications and changes may be made thereunto without departing from the scope of the invention as set forth in the claims.

### LIST OF REFERENCE SIGNS

- 1000: information visualizing system
- 1010: production machine
- 1020: processing unit
- 1030: camera device
- 1040: viewing window
- 1050: viewing position
- 1060: first physical object
- 1070: transparent display device
- 1080: first data visualization element
- 1090: first static data visualization element
- 1100: second static data visualization element

- 2000: first vector
- 2010: second vector
- 2020: line of sight
- 2030: intersection
- 2040: second physical object
- 2050: second data visualization element
- 2060: third data visualization element

## Claims

1. An information visualizing system (1000) for a production machine (1010), the information visualizing system (1000) comprising
- a transparent display device (1070) that is arrangeable such that a first side of the transparent display device (1070) faces towards a user and a second side of the transparent display device (1070) faces towards one or more physical objects (1060, 2040) within the production machine (1010);
- a camera device (1030) configured to obtain eye tracking data from the user; and
- a processing unit configured to
- determine, based on the eye tracking data of the user, a viewing position (1050) of the user in relation to the first side of the transparent display device (1070); and
- determine, based on the viewing position (1050) of the user and on a spatial position of one of the one or more physical objects (1060, 2040), a first position of a data visualization element (1080) on the transparent display device (1070) at a defined distance to a second position, at which the one physical object (1060, 2040) is visible to the user through the transparent display device (1070), wherein the first position is defined on a plane of the transparent display device (1070) and wherein the processing unit is configured to determine the first position by
- obtaining a first vector (2000) from the viewing position (1050) from the user;
- obtaining a second vector (2010) of the spatial position of the one physical object (1060, 2040);
- combining the first vector (2000) and the second vector (2010) to obtain the second position, as an intersection (2030) of a line of sight (2020) between the user and the one physical object (1060, 2040) with the plane of the transparent display device (1070); and
- determining the first position of the data visualization element (1080) on the plane of the transparent display device (1070) in relation to the intersection (2030) of the line of sight (2020) with the plane of the transparent display device (1070) as an offset to the second position.

2. The information visualizing system (1000) according to claim 1, wherein the transparent display device (1070) is configured as a viewing window (1040) in an opening of the production machine (1010).

3. The information visualizing system (1000) according to one of claims 1 to 2, wherein the transparent display device (1070) is mountable on a viewing window (1040) in an opening of the production machine (1010).

4. The information visualizing system (1000) according to one of claims 1 to 3, wherein the transparent display device (1070) is a touch screen, and the data visualization element (1080) is configured to be manipulated by the user.

5. The information visualizing system (1000) according to claim 4, wherein the data visualization element (1080) is configured for controlling the production machine (1010).

6. The information visualizing system (1000) according to one of claims 1 to 5, wherein the camera device (1030) is configured to obtain eye tracking data using infrared spectrum light and/or a depth sensor and/or other multi-sensor technology.

7. A method for visualizing information on a production machine (1010), which comprises a transparent display device (1070) that is arrangeable such that a first side of the transparent display device (1070) faces towards a user and a second side of the transparent display device (1070) faces towards one or more physical objects (1060, 2040) within the production machine (1010), the method comprising:
- determining, based on obtained eye tracking data of the user, a viewing position (1050) of the user in relation to the first side of the transparent display device (1070); and
- determining, based on the viewing position (1050) of the user and on a spatial position of one of the one or more physical objects (1060, 2040), a first position of a data visualization element (1080) on the transparent display device (1070) at a defined distance to a second position, at which the one physical object (1060, 2040) is visible to the user through the transparent display device (1070), wherein the first position is defined on a plane of the transparent display device (1070);
wherein determining the first position comprises
- obtaining a first vector (2000) from the viewing position (1050) from the user;
- obtaining a second vector (2010) of the spatial position of the one physical object (1060, 2040);
- combining the first vector (2000) and the second vector (2010) to obtain the second position, as an intersection (2030) of a line of sight (2020) between the user and the one physical object (1060, 2040) with the plane of the transparent display device (1070); and
- determining the first position of the data visualization element (1080) on the plane of the transparent display device (1070) in relation to the intersection (2030) of the line of sight (2020) with the plane of the transparent display device (1070) as an offset to the second position.

8. The method according to claim 7, wherein the eye tracking data is obtained with a camera device (1030).

9. The method according to claim 7 or 8, wherein the data visualization element (1080) is provided to be manipulated by the user through the transparent display device (1070), wherein the transparent display device (1070) is configured as a touch screen.

10. The method according to claim 9, wherein the data visualization element (1080) is provided for controlling the production machine (1010).
